# EUROPEAN PATENT APPLICATION

(11) **EP 2 677 117 A2**
(43) Date of publication of application: **25.12.2013**
(21) Application number: 13172704.2
(22) Date of filing: 19.06.2013
(51) Int. Cl.: E21C 49/02

(54) **Belt assembly for conveyor mechanism of a peat moss harvesting apparatus**

(30) Priority: 19.06.2012 US 201261661652 P
(71) Applicant: NCL Holding Inc., Tracadie-Sheila NB E1X 1A3 (CA)
(72) Inventor: Noël, Philippe, Tracadie-Sheila, New Brunswick E1X 1A3 (CA)
(74) Representative: Lang, Christian

(57) **Abstract**

A peat moss harvesting apparatus (10) includes a supporting structure (12) attachable to a carrier vehicle (14), and a conveyor mechanism (22) mounted to the supporting structure (12). The conveyor mechanism (22) includes first and second pulleys (52, 54) and a belt assembly (48). The belt assembly (48) includes at least one flexible drive element (88a, 8b), a plurality of transverse supports (92) mounted to the drive element, and a plurality of cover members (50) mounted to the transverse supports. The cover members (50) define a support surface (82) for conveying material. The transverse supports (92) may be longitudinally spaced apart from one another along the drive element. Each of the cover members (50) may be fixed to a respective one of the transverse supports (92).

## Description

### FIELD

The present disclosure relates to apparatuses for harvesting peat moss.

### BACKGROUND

Canadian Patent No. 2,065,923 describes an attachment mounted to an articulated boom of a carrier vehicle for harvesting and dewatering peat moss material. The attachment comprises an apertured bucket for digging peat moss material and a ram movable with relation to the bucket between an extended position and a retracted position. The ram and the bucket define a variable volume press chamber which is contractible in response to movement of the ram member toward the extended position for expressing water from the load of peat moss material gathered in the bucket. A method for harvesting and dewatering peat moss material is also described.

United States Patent No. 8,353,118 describes a peat moss harvesting apparatus that includes a conveyor mechanism and a cutting mechanism. The cutting mechanism is guided through a peat moss bed to cut a section of peat moss. The section of peat moss is progressively loaded onto the conveyor mechanism as the section of peat moss is being cut.

### INTRODUCTION

The following paragraphs are intended to introduce the reader to the more detailed description that follows and not to define or limit the claimed subject matter.

In an aspect of the present disclosure, a peat moss harvesting apparatus may include: a supporting structure attachable to a carrier vehicle, the supporting structure including a forward edge and a rearward edge; and a conveyor mechanism mounted to the supporting structure, the conveyor mechanism including a first pulley arranged adjacent to the forward edge, a second pulley arranged adjacent to the rearward edge, and a belt assembly, the belt assembly including at least one flexible drive element adapted to revolve about the first and second pulleys, a plurality of transverse supports mounted to the drive element, and a plurality of cover members mounted to the transverse supports, the cover members defining a support surface for conveying material generally from the first pulley to the second pulley.

The transverse supports may be longitudinally spaced apart from one another along the drive element. Each of the cover members may be fixed to a respective one of the transverse supports. Each of the cover members may include a first edge, and the cover member may be fixed to the respective transverse support generally along the first edge. Each of the cover members may include a second edge generally opposite from the first edge, and the second edge may generally adjoin the first edge of an adjacent cover member. The second edge may overlap the first edge of the adjacent cover member. Along the support surface, each of the cover members may be oriented so that the second edge is closer to the first pulley than the second pulley.

The cover members may include at least one of outer traction features and an outer non-slip lining.

The at least one drive element may include a chain, and at least one of the first and second pulleys may include a sprocket for driving the chain.

The at least one drive element may include first and second drive elements that are transversely spaced apart from one another. Each of the transverse supports may extend generally between the first and second drive elements. Each of the transverse supports may include first and second ends, and the first and second ends may be fixed to the first and second drive elements, respectively. Each of the first and second drive elements may include a chain, and at least one of the first and second pulleys may include a sprocket for driving each of the chains.

The conveyor mechanism may include first and second belt assemblies arranged in a side-by-side relationship. Each of the belt assemblies may include first and second drive elements that are transversely spaced apart from one another and are adapted to revolve about the first and second pulleys.

The apparatus may further include a cutting mechanism mounted generally across the forward edge of the supporting structure and offset forwardly from the conveyor mechanism, the cutting mechanism disposed at an inclined angle relative to the conveyor mechanism, and the cutting mechanism guidable through a peat moss bed to cut a section of peat moss from the peat moss bed.

The apparatus may further include: a cut guide element arranged generally between the cutting mechanism and the conveyor mechanism, and the cut guide element is configured to direct the section of peat moss from the cutting mechanism to be progressively loaded onto the conveyor mechanism as the section of peat moss is cut; and a pass guide element arranged generally underneath and rearwardly of the cutting mechanism at the forward edge, and the pass guide element is configured to engage the peat moss bed as the cutting mechanism is guided through the peat moss bed, wherein the cut guide element and the pass guide element are spaced apart to facilitate a physical separation between the section of peat moss and the peat moss bed, so as to accommodate the conveyor mechanism as the apparatus is guided along a generally arcuate path through the peat moss bed.

In an aspect of the present disclosure, a belt assembly for a conveyor mechanism, which includes first and second pulleys, may include: at least one flexible drive element adapted to revolve about the first and second pulleys; a plurality of transverse supports mounted to the drive element; and a plurality of cover members mounted to the transverse supports, the cover members defining a support surface for conveying material generally from the first pulley to the second pulley.

The transverse supports may be longitudinally spaced apart from one another along the drive element. Each of the cover members may be fixed to a respective one of the transverse supports. Each of the cover members may include a first edge, and the cover member may be fixed to the respective transverse support generally along the first edge. Each of the cover members may include a second edge generally opposite from the first edge, and the second edge may generally adjoin the first edge of an adjacent cover member. The second edge may overlap the first edge of the adjacent cover member.

The cover members may include at least one of outer traction features and an outer non-slip lining.

The at least one drive element may include a chain.

The at least one drive element may include first and second drive elements that are transversely spaced apart from one another. Each of the transverse supports may extend generally between the first and second drive elements. Each of the transverse supports may include first and second ends, and the first and second ends may be fixed to the first and second drive elements, respectively. Each of the first and second drive elements may include a chain.

In an aspect of the present disclosure, a belt assembly may include: at least one flexible drive element; a plurality of transverse supports mounted to the drive element and longitudinally spaced apart from one another along the drive element; and a plurality of cover members mounted to the transverse supports, each of the cover members is fixed to a respective one of the transverse supports, each of the cover members comprising a first edge and a second edge generally opposite from the first edge, the cover member is fixed to the respective transverse support generally along the first edge, and the second edge overlaps the first edge of the adjacent cover member.

Other aspects and features of the teachings disclosed herein will become apparent, to those ordinarily skilled in the art, upon review of the following description of the specific examples of the present disclosure.

### BRIEF DESCRIPTION OF THE DRAWINGS

The drawings included herewith are for illustrating various examples of articles, methods, and apparatuses of the present disclosure and are not intended to limit the scope of what is taught in any way. In the drawings:
FIG. 1 is a perspective view of a peat moss harvesting apparatus attached to a carrier vehicle;
FIG. 2 is an enlarged perspective view of the apparatus of FIG. 1;
FIG. 3 is a front view of the apparatus of FIG. 1;
FIG. 4 is a sectional view along line 4-4 in FIG. 3;
FIGS. 5A and 5B are perspective and cutaway perspective views of a belt assembly of the apparatus of FIG. 1;
FIGS. 6A to 6E are a series of side, sectional, schematic views of the apparatus of FIG. 1 harvesting a section of peat moss from a peat moss bed;
FIGS. 7A to 7E are a series of side, sectional, schematic views of the apparatus of FIG. 1 harvesting another section of peat moss from another peat moss bed; and
FIGS. 8A to 8C are a series of side, sectional, schematic views of the apparatus of FIG. 1 unloading a section of peat moss.

### DETAILED DESCRIPTION

Various apparatuses or methods will be described below to provide an example of an embodiment of each claimed invention. No embodiment described below limits any claimed invention and any claimed invention may cover apparatuses and methods that differ from those described below. The claimed inventions are not limited to apparatuses and methods having all of the features of any one apparatus or method described below or to features common to multiple or all of the apparatuses or methods described below. It is possible that an apparatus or method described below is not an embodiment of any claimed invention. Any invention disclosed in an apparatus or method described below that is not claimed in this document may be the subject matter of another protective instrument, for example, a continuing patent application, and the applicant(s), inventor(s) and/or owner(s) do not intend to abandon, disclaim or dedicate to the public any such invention by its disclosure in this document.

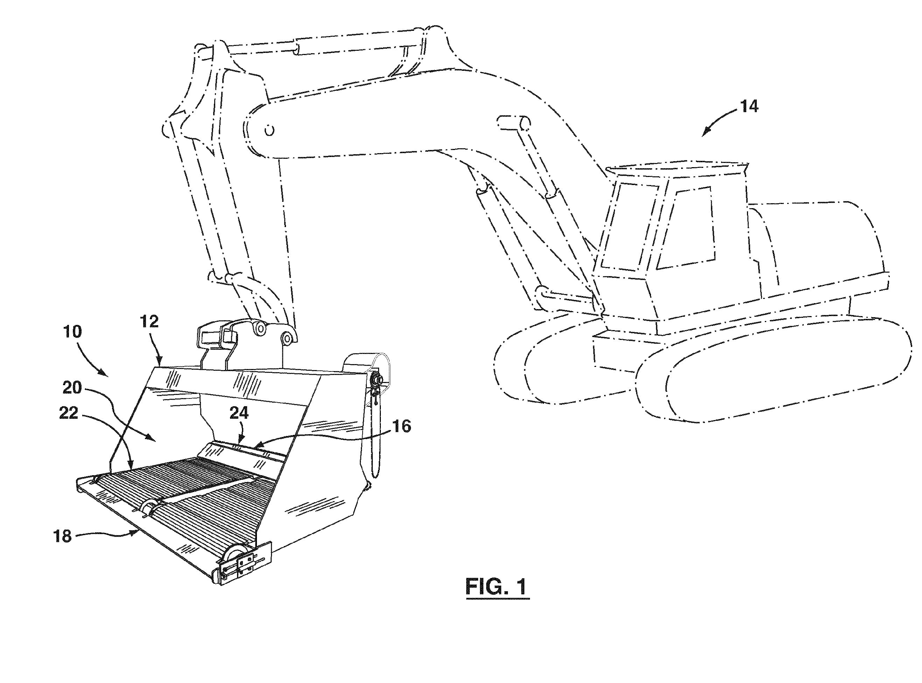

Referring to FIG. 1, an example of a peat moss harvesting apparatus is shown generally at 10. The apparatus 10 includes a supporting structure 12. The supporting structure 12 includes a transverse forward edge 16 and a transverse rearward edge 18, and defines a load chamber 20 arranged generally between the forward and rearward edges 16, 18. The supporting structure 12 is attachable to a carrier vehicle 14. In the example illustrated, the carrier vehicle 14 is a tractor, and the supporting structure 12 is shown attached to an articulated boom of the tractor.

The apparatus 10 further includes a conveyor mechanism 22 mounted to the supporting structure 12. The conveyor mechanism 22 is configured to convey material in the load chamber 20 generally from the forward edge 16 to the rearward edge 18.

The apparatus 10 can further include a cutting mechanism 24 mounted transversely generally across the forward edge 16 of the supporting structure 12. In use, the cutting mechanism 24 can be guided through a peat moss bed to cut a section of peat moss therefrom. The section of peat moss is progressively loaded onto the conveyor mechanism 22 as the section of peat moss is being cut.

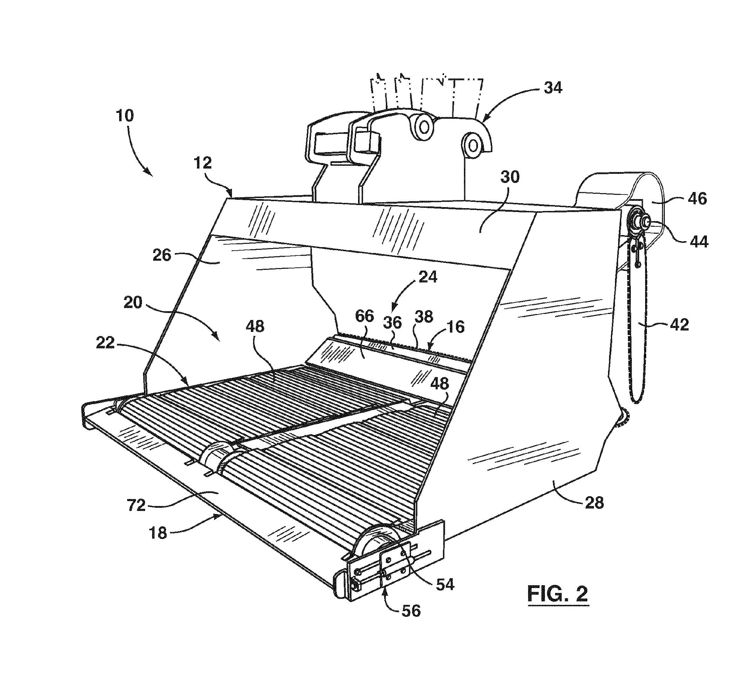

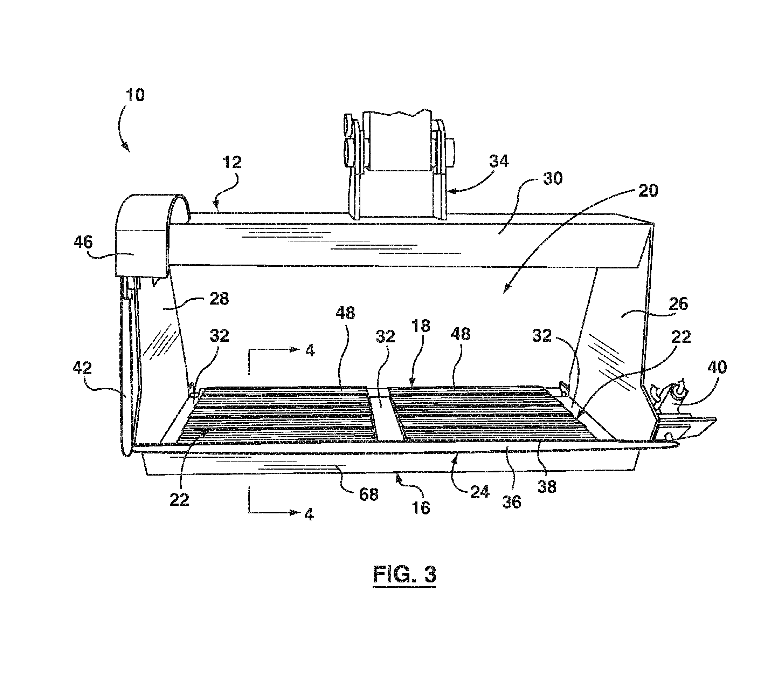

Referring now to FIGS. 2 and 3, the conveyor mechanism 22 is shown to include first and second belt assemblies, each denoted by reference numeral 48, and which can be generally identical in construction. The belt assemblies 48 are shown arranged in a side-by-side relationship. A section of freshly harvested peat moss can be relatively heavy due to its water content. For example, a 4x8 foot section of peat moss that is 20 to 30 inches thick can weigh up to 3,000 pounds. Mass of a section of peat moss loaded onto the supporting structure 12 can therefore be distributed between the belt assemblies 48. In other examples, the conveyor mechanism can include two or more belt assemblies, arranged in side-by-side and/or front-to-back relationships.

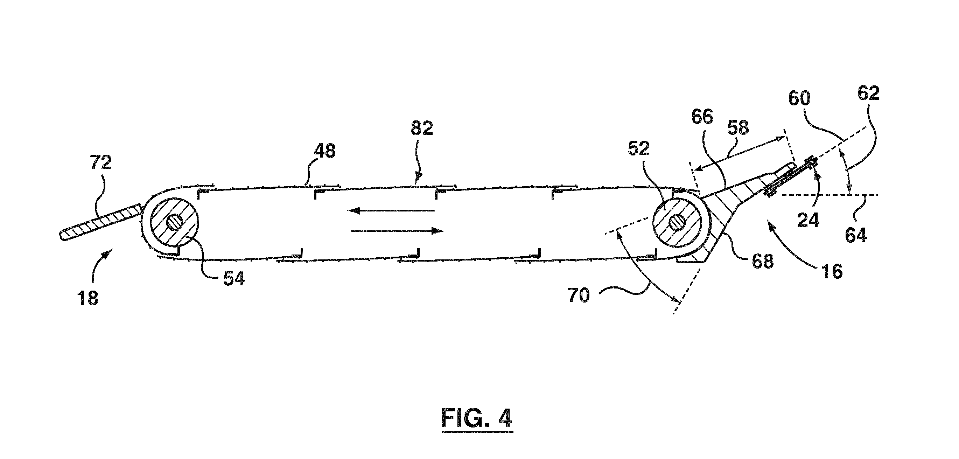

Referring to FIG. 4, the belt assemblies 48 are shown suspended between a first pulley 52 and a second pulley 54. The pulleys 52, 54 can be connected to the supporting structure 12 adjacent to the edges 16, 18, respectively (FIG. 2). The pulleys 52, 54 can each consist of a single shaft element extending transversely generally across the supporting structure 12, or two or more elements aligned in series generally across the supporting structure 12, so that the mass of a section of peat moss can be distributed over a plurality of load-bearing elements. An adjustment device 56 (FIG. 2) can be provided coupling the second pulley 54 to the supporting structure 12, which can be used to vary a distance between the pulleys 52, 54, and thus adjust tension on the belt assemblies 48. Further, one or more scraper members (not shown) can be provided internally or externally relative to the belt assemblies 48 to clean the belt assemblies 48 as they are driven between the pulleys 52, 54.

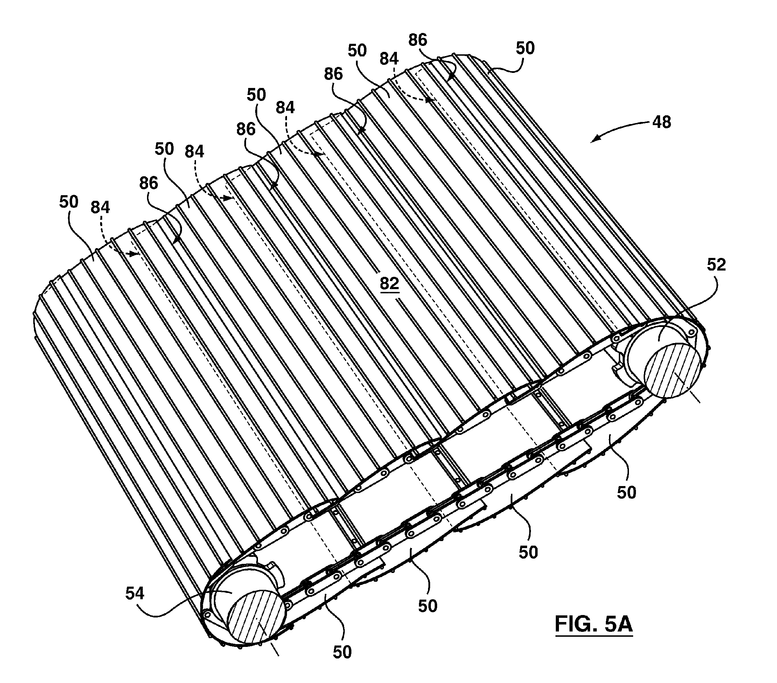

Referring to FIG. 5A, the belt assembly 48 includes a plurality of cover members 50. The cover members 50 are arranged to define an upper support surface 82 for conveying the section of peat moss generally from the first pulley 52 to the second pulley 54. Each of the cover members 50 is shown to be generally planar and rectangular in shape. However, other shapes of the cover members 50 are possible.

In some examples, as illustrated, each of the cover members 50 can include a first or leading edge 84, and a second or trailing edge 86 generally opposite from the first edge 84. The second edge 86 of each of the cover members 50 can generally adjoin the first edge 84 of an adjacent cover member 50, so that the support surface 82 can be generally continuous between the pulleys 52, 54. In the example illustrated, the second edge 86 overlaps the first edge 84 of the adjacent cover member 50, so that the first edge 84 of each of the cover members 50 is generally hidden from view.

As illustrated, the cover members 50 can optionally include outer traction features, for example, 1/8" transversely extending ribs or corrugations, which can help provide traction between the conveyor mechanism 22 and the section of peat moss while it is being conveyed by the conveyor mechanism 22. The cover members 50 can also be formed of a non-slip, wear resistant material. Furthermore, the cover members 50 can each be formed of a single layer, or more than one layer, including at least one inner base layer and at least one outer liner layer, which can be formed at least partially of a non-slip material.

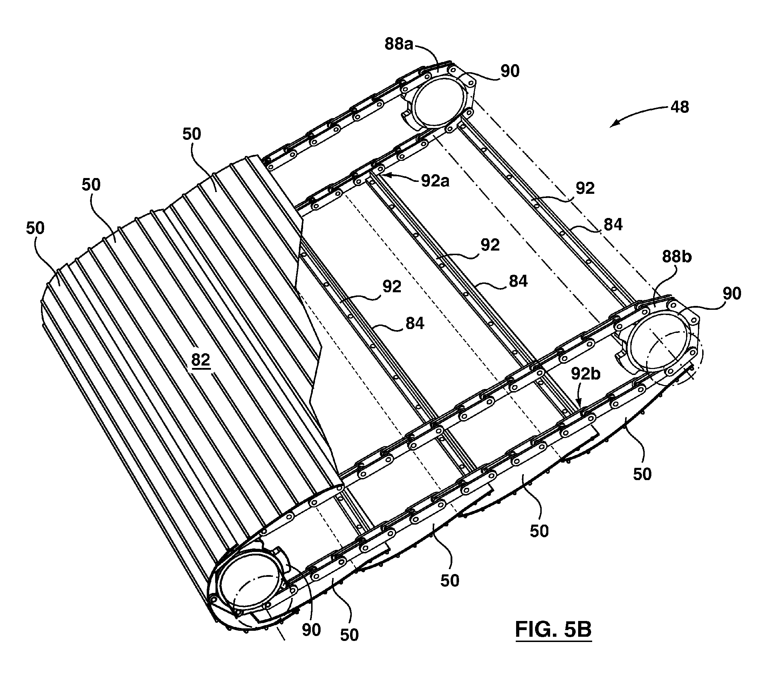

Referring now to FIG. 5B, in the example illustrated, the belt assembly 48 also includes first and second flexible drive elements 88a, 88b. The drive elements 88a, 88b can be transversely spaced apart from one another, and each can revolve about the pulleys 52, 54 (FIG. 5A).

In the example illustrated, the drive elements 88a, 88b take the form of roller chains. The pulleys 52, 54 are shown to include sprockets 90, and teeth of the sprockets 90 engage the chain links of the drive elements 88a, 88b. For each of the drive elements 88a, 88b, at least one of the sprockets 90 can be driven to advance the belt assembly 48 as desired. The sprockets 90 can be driven by, for example but not limited to, a hydraulic motor (not shown). The sprockets 90 can be driven in combination with the respective pulleys 52, 54, or can be driven independently of the pulleys 52, 54.

The belt assembly 48 further includes a plurality of transverse supports 92. The transverse supports 92 can be longitudinally spaced apart from one another. Each of the transverse supports 92 can extend generally between the first and second drive elements 88a, 88b. In the example illustrated, each of the transverse supports 92 includes a first end 92a that is fixed (e.g., welded) to the first drive element 88a, and a second end 92b that is fixed (e.g., welded) to the second drive element 88b. In some examples, each of the transverse supports 92 can take the form of a structural steel member having, for example but not limited to, an angle or L-shaped profile.

The transverse supports 92 can help to distribute load force from the cover members 50 to the drive elements 88a, 88b. Each of the cover members 50 can be fixed to a respective one of the transverse supports 92. In some examples, as illustrated, each of the cover members 50 is fixed (e.g., bolted) to the respective transverse support 92 generally along the first edge 84. As mentioned above, the second edge 86 of one of the cover members 50 can overlap the first edge 84 of the adjacent cover member 50. In this manner, each of the transverse supports 92 can generally support the first edge 84 of the cover member 50 attached to it, along with the overlapping second edge 86 of the adjacent cover member 50.

Referring again to FIGS. 2 and 3, in the example illustrated, the supporting structure 12 includes a right side wall 26 and a left side wall 28 spaced apart from the right side wall 26. Top and bottom frame members 30, 32 span between the right and left side walls 26, 28. The right and left side walls 26, 28 and top and bottom frame members 30, 32 generally enclose the load chamber 20. The top frame member 30 is shown to include a connection device 34 facilitating attachment to the carrier vehicle 14 (FIG. 1).

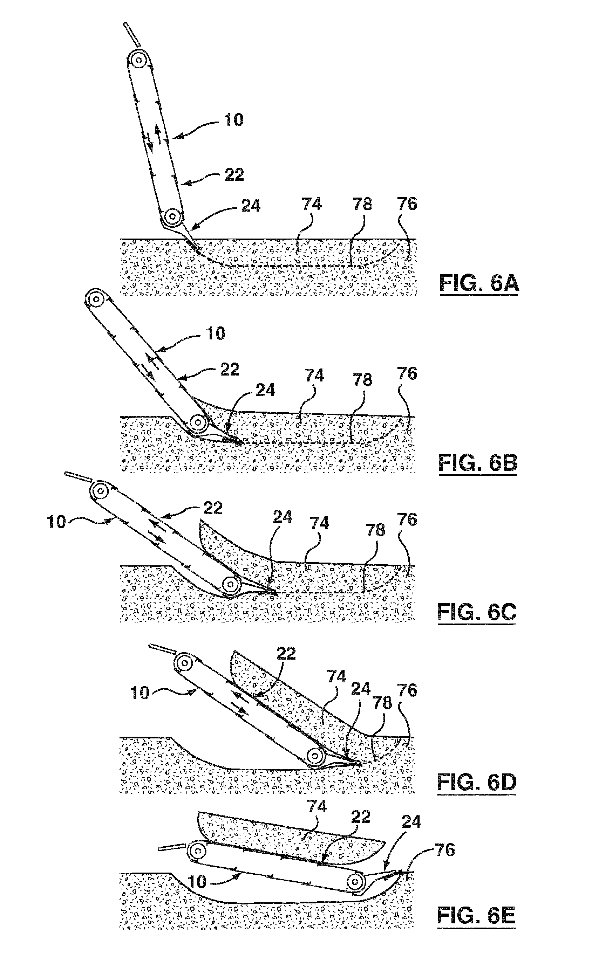

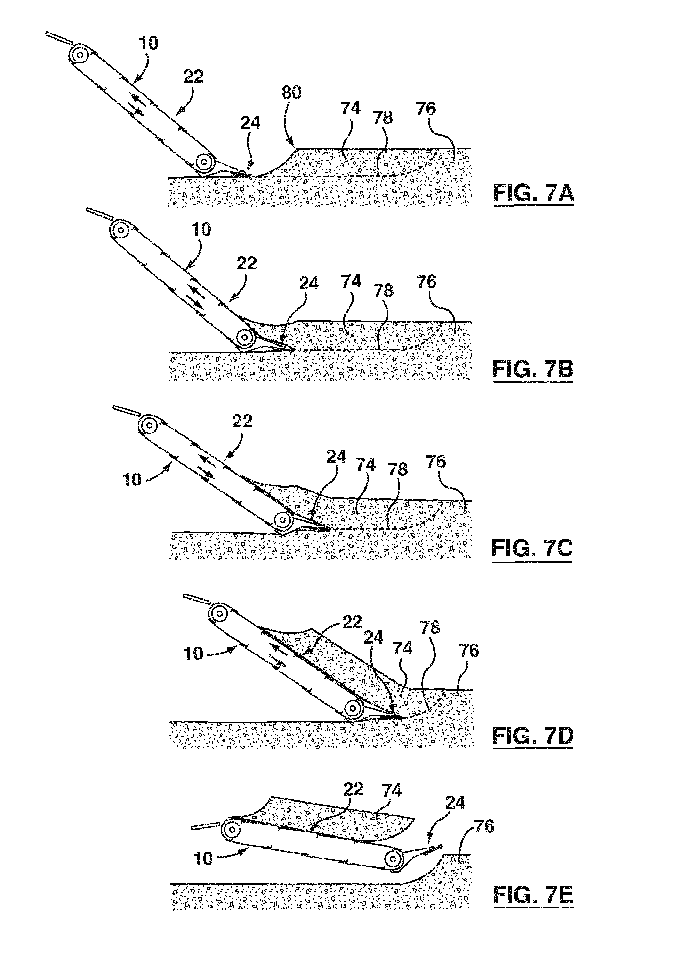

Referring again to FIG. 4, in the example illustrated, the cutting mechanism 24 is offset forwardly relative to the conveyor mechanism 22 by an offset dimension 58. In some examples, the offset dimension 58 is between about 6 to 14 inches, or between about 10 to 14 inches. Further, a cutting plane 60, which is generally defined by the cutting mechanism 24, is disposed at an inclined angle 62 relative to a belt plane 64, which is generally defined by the support surface 82 of the belt assemblies 48 of the conveyor mechanism 22. In some examples, the inclined angle is between about 25 and 40 degrees, or between about 30 and 35 degrees. The offset dimension 58 and the inclined angle 62 can generally facilitate the cutting mechanism 24 being guided along an arcuate path through the peat moss bed during cutting (as described below, with reference to FIGS. 6A to 6E and/or FIGS. 7A to 7E).

A cut guide element 66 can be arranged generally between the cutting mechanism 24 and the support surface 82 of the belt assemblies 48 of the conveyor mechanism 22, at the forward edge 16. The cut guide element 66 is configured to direct a section of peat moss from the cutting mechanism 24 to the conveyor mechanism 22 to be progressively loaded thereon.

A pass guide element 68 can be arranged generally underneath the cutting mechanism 24 at the forward edge 16. The pass guide element 68 is configured to engage and ride along the surface of peat moss bed, following the cutting mechanism 24 as it is guided through the peat moss bed and the section of peat moss is being cut. Spacing between the elements 66, 68 can generally facilitate a physical separation between the cut section of peat moss and the peat moss bed, so as to accommodate the conveyor mechanism 22 as the apparatus 10 is guided through the peat moss bed. In the example illustrated, the cut guide element 66 and the pass guide element 68 are arranged at a diverging angle 70 in relation to the cutting mechanism 24. The cut guide element 66 and the pass guide element 68 can be formed of separate components, or, as illustrated, can be an integral component.

A rear guide element 72 can be arranged close to the support surface 82 of the belt assemblies 48 of the conveyor mechanism 22 at the rearward edge 18. The rear guide element 72 is configured to guide the section of peat moss as it is being unloaded from the conveyor mechanism 22.

Peat moss can consist of up to 10% or more of wood material, and thus it is desirable for the cutting mechanism 24 to have sufficient power and capability to cut through wood cleanly and without excessive damage to the peat moss surrounding the area of the cut. In the example illustrated, referring again to FIGS. 2 and 3, the cutting mechanism 24 takes the form of a chainsaw device, including a guide bar 36 and a cutting chain 38. A first cutting motor 40 is provided to drive the cutting chain 38 around the guide bar 36. In the example illustrated, the cutting chain 38 spans the transverse width of the forward edge 16 (which can be, for example, 48 inches wide), although the cutting mechanism 24 can include more than one guide bar and cutting chain arranged in alignment across the forward edge 16.

The apparatus 10 can further include at least one upright or vertical cutting mechanism 42 mounted to the supporting structure 12 and arranged at the forward edge 16, adjacent to an end of the cutting mechanism 24 at the right and/or left side walls 26, 28. In the example illustrated, the upright cutting mechanism 42 also takes the form of a chainsaw device and includes a guide bar and a cutting chain. The upright cutting mechanism 42 is driven by a second cutting motor 44, and at least a portion of the upright cutting mechanism 42 and the motor 44 can be enclosed by a guard 46. The apparatus 10 can include a single upright cutting mechanism 42 arranged adjacent to one side, as shown, or two upright cutting mechanisms 42 arranged on either side of the forward edge 16, adjacent to the right and left side walls 26,28.

For the cutting mechanisms 24, 42, the inventors have obtained satisfactory results using OREGON™ chain, bar and sprocket products (Blount Inc. of Portland, Oregon).

The apparatus 10 can further include various electrical cables, hydraulic/pneumatic lines and other power connections for controlling the cutting motors 40, 44, the motor (not shown) for driving the belt assemblies 48, and/or other components, which have been omitted from the drawings for the purposes of clarity. Further, a central controller (not shown) can be provided to allow an operator to centrally control a cutting operation of the apparatus 10 by controlling belt speed of the conveyor mechanism 22 and actuation of the cutting mechanism 24. The central controller can be housed alongside other controls in the carrier vehicle.

FIGS. 6A to 6E schematically illustrate the apparatus 10 cutting a section of peat moss 74 from a peat moss bed 76, and progressively loading the section of peat moss 74 onto the conveyor mechanism 22 as the section of peat moss 74 is being cut by the cutting mechanism 24. Referring to FIG. 6A, the cutting mechanism 24 can be actuated before engaging the peat moss bed 76, and the conveyor mechanism 22 can be driven, with a belt speed selected to generally match a speed in which the cutting mechanism 24 is guided through the peat moss bed 76. FIG. 6A illustrates the apparatus 10 oriented at a relatively steep angle of attack as the apparatus 10 engages the peat moss bed 76.

As illustrated, referring to FIGS. 6B to 6E, the cutting mechanism 24 is guided along a generally arcuate or non-linear path 78 through the peat moss bed 76 to cut the section of peat moss 74. Again, a belt speed of the conveyor mechanism 22 can be maintained to generally match the cutting speed in which the cutting mechanism 24 is guided through the peat moss bed 76, so that the section of peat moss 74 is progressively loaded onto the conveyor mechanism 22. As the section of peat moss 74 is being cut, as illustrated, the apparatus 10 can be rotated about the section of peat moss 74 so that the rearward edge is moved downwardly relative to the forward edge, defining what can be described as a "scooping action" of the apparatus 10 relative to the peat moss bed 76. After the section of peat moss 74 has been cut from the peat moss bed 76, as shown in FIG. 6E, the conveyor mechanism 22 can be stopped so that the section of peat moss 74 is retained thereon.

By cutting the section of peat moss 74 in this manner, the section of peat moss 74 can be supported by the apparatus 10 generally throughout the cutting operation, so that the structure of the section of peat moss 74 is maintained generally intact and without significant fibre breakage, which can cause an undesirable chain reaction of decomposition.

FIGS. 7A to 7E are generally similar to FIGS. 6B to 6E, with the difference being that the peat moss bed 76 includes a lip 80 formed from an earlier cutting operation. FIG. 7A illustrates the apparatus 10 oriented at a lesser angle of attack, in comparison to FIG. 6A, as the apparatus 10 engages the peat moss bed 76. The cutting operation shown in FIGS. 7A to 7E can be repeated continuously along a row at a harvesting site, with each new section of peat moss being cut beginning roughly at the lip 80 formed by a previous cutting operation.

It should be appreciated that a single upright cutting mechanism 42 (FIG. 3) can be sufficient if cutting operations at a harvesting site are conducted in a pattern of adjacent rows, in which a section of peat moss that is being cut lies directly adjacent to an open space created by a previous cutting operation, so that only a single side cut is necessary to free the section of peat moss from the peat moss bed.

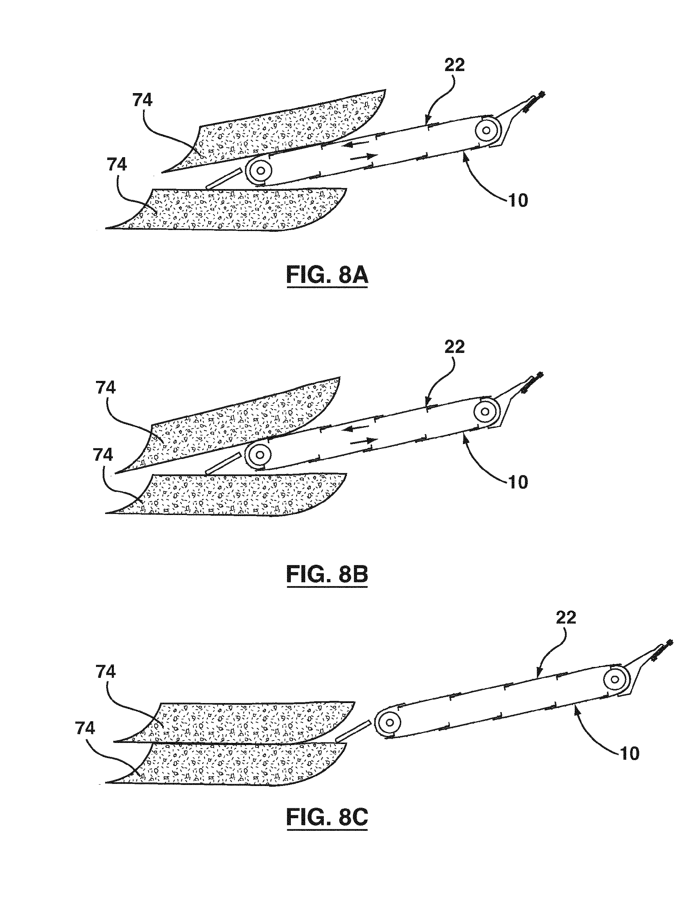

After cutting the section of peat moss 74, the apparatus can be moved to another location to unload the section of peat moss 74, which can be unloaded and stacked, for example, on the ground or onto pallets for further transport. FIGS. 8A to 8C schematically illustrate the apparatus 10 progressively unloading the section of peat moss 74, and stacking the section of peat moss 74 onto another section.

While the above description provides examples of one or more apparatuses or methods, it will be appreciated that other apparatuses or methods may be within the scope of the accompanying claims.

## Claims

1. A peat moss harvesting apparatus, comprising:
a supporting structure attachable to a carrier vehicle, the supporting structure comprising a forward edge and a rearward edge; and
a conveyor mechanism mounted to the supporting structure, the conveyor mechanism comprising a first pulley arranged adjacent to the forward edge, a second pulley arranged adjacent to the rearward edge, and a belt assembly, the belt assembly comprising at least one flexible drive element adapted to revolve about the first and second pulleys, a plurality of transverse supports mounted to the drive element, and a plurality of cover members mounted to the transverse supports, the cover members defining a support surface for conveying material generally from the first pulley to the second pulley.

2. The apparatus of claim 1, wherein the transverse supports are longitudinally spaced apart from one another along the drive element.

3. The apparatus of claim 2, wherein each of the cover members is fixed to a respective one of the transverse supports.

4. The apparatus of claim 3, wherein each of the cover members comprises a first edge, and the cover member is fixed to the respective transverse support generally along the first edge.

5. The apparatus of claim 4, wherein each of the cover members comprises a second edge generally opposite from the first edge, and the second edge generally adjoins the first edge of an adjacent cover member.

6. The apparatus of claim 5, wherein the second edge overlaps the first edge of the adjacent cover member.

7. The apparatus of claim 6, wherein, along the support surface, each of the cover members is oriented so that the second edge is closer to the first pulley than the second pulley.

8. The apparatus of any one of claims 1 to 7, wherein the cover members comprise at least one of outer traction features and an outer non-slip lining.

9. The apparatus of any one of claims 1 to 8, wherein the at least one drive element comprises a chain, and at least one of the first and second pulleys comprises a sprocket for driving the chain.

10. The apparatus of any one of claims 1 to 9, wherein the at least one drive element comprises first and second drive elements that are transversely spaced apart from one another.

11. The apparatus of claim 10, wherein each of the transverse supports extend generally between the first and second drive elements.

12. The apparatus of claim 11, wherein each of the transverse supports comprises first and second ends, and the first and second ends are fixed to the first and second drive elements, respectively.

13. The apparatus of any one of claims 10 to 12, wherein each of the first and second drive elements comprises a chain, and at least one of the first and second pulleys comprises a sprocket for driving each of the chains.

14. The apparatus of any one of claims 1 to 13, wherein the conveyor mechanism comprises first and second belt assemblies arranged in a side-by-side relationship, and each of the belt assemblies comprises first and second drive elements that are transversely spaced apart from one another and are adapted to revolve about the first and second pulleys.

15. A belt assembly for a conveyor mechanism comprising first and second pulleys, the belt assembly comprising:
at least one flexible drive element adapted to revolve about the first and second pulleys;
a plurality of transverse supports mounted to the drive element the transverse supports are preferably longitudinally spaced apart from one another along the drive element; and
a plurality of cover members mounted to the transverse supports, the cover members defining a support surface for conveying material generally from the first pulley to the second pulley, each of the cover members is preferably fixed to a respective one of the transverse supports.
